# FASCICULE DE BREVET EUROPEEN

(11) **EP 2 600 699 B1**
(45) Date de publication et mention de la délivrance du brevet: **26.04.2017**
(21) Numéro de dépôt: 12193608.2
(22) Date de dépôt: 21.11.2012
(51) Int. Cl.: H05H 1/34, B23K 10/00

(54) **Torche à plasma d'arc avec isolation électrique améliorée**
Lichtbogenplasmabrenner mit verbesserter elektrischer Isolierung
Plasma arc torch with enhanced electrical insulation

(30) Priorité: 01.12.2011 FR 1161010
(43) Date de publication de la demande: 05.06.2013
(73) Titulaire: AIR LIQUIDE WELDING FRANCE, 75007 Paris (FR)
(72) Inventeur: De Laurentis, Cataldo, 95800 CERGY-LE-HAUT (FR); Remy, Francis, 95130 FRANCONVILLE (FR); Uhlig, Peter, 95160 MONTMORENCY (FR)
(74) Mandataire: Pittis, Olivier

(56) Documents cités:
- FR-A1- 2 450 659
- FR-A1- 2 609 591
- US-A- 3 558 973
- US-A- 5 124 525

## Description

L'invention concerne une torche à plasma d'arc utilisable en coupage plasma, en particulier une torche à plasma d'arc utilisable en coupage par plasma d'arc en vortex d'eau, dont la durée de vie des composants et le fonctionnement sont améliorés grâce à une meilleure isolation électrique entre la coiffe externe de la torche et les composants de la tête de la torche, ainsi qu'un procédé de coupage mettant en oeuvre ladite torche.

La mise en oeuvre d'un procédé de coupage par plasma d'arc nécessite l'application de différences de potentiel électrique entre l'électrode et la tuyère amont équipant la tête de la torche à plasma d'arc utilisée, ainsi qu'entre l'électrode et la tôle à découper.

Ainsi, au cours de la phase d'amorçage de l'arc électrique, un potentiel alternatif de l'ordre de 6 à 15 kV est appliqué entre l'électrode et la tuyère amont. Pour cela, ces deux composants sont reliés à un générateur de courant délivrant une tension à vide, c'est-à-dire avant amorçage de l'arc électrique, d'environ 350 V. Il s'ensuit l'établissement d'un arc pilote d'une intensité de l'ordre de 20 à 40 A entre l'électrode, reliée au pôle négatif du générateur et formant la cathode, et la tuyère amont, reliée au pôle positif du générateur et formant l'anode. La tension résultante est de l'ordre de 20 à 60 V.

L'arc pilote est ensuite soufflé en dehors de la torche à plasma d'arc vers la pièce métallique à découper grâce à un flux de gaz plasmagène délivré par la tuyère amont. L'électrode reste reliée au pôle négatif du générateur et la tôle est reliée au pôle positif.

Après transfert de l'arc électrique à la tôle, la phase de coupage débute et la tension entre l'électrode et la tôle est de l'ordre de 120 à 220 V. Cette tension dépend de la longueur de l'arc, c'est-à-dire de la distance entre la torche à plasma d'arc et la tôle découpée. Si la tôle n'est pas horizontale, cette distance peut augmenter et entraîner une augmentation de la tension appliquée par le générateur entre l'électrode et la tôle. Dans le cas extrême où la torche quitte le périmètre de la tôle, cette distance devient infinie. L'arc est « étiré » jusqu'à ça coupure, ce qui entraîne une augmentation de la tension appliquée par le générateur entre l'électrode et la tôle jusqu'à la tension maximale qu'il peut fournir, c'est-à-dire sa tension à vide de 350 V environ.

L'électrode et la tuyère d'une tête de torche à plasma d'arc amont peuvent donc être soumises à des potentiels électriques conséquents, mais c'est également le cas pour d'autres composants de la tête de torche. En particulier, la coiffe externe agencée autour de la tête de torche à plasma d'arc peut aussi être soumise à des potentiels importants. A noter que les principaux composants d'une torche à plasma d'arc ainsi que la coiffe externe sont généralement formés de matériaux métalliques électriquement conducteurs, tels le laiton ou le cuivre.

L'apparition de potentiels électriques au niveau de la coiffe externe résulte en premier lieu de la mise en liaison électrique de la coiffe avec les composants de la tête de torche sous potentiel électrique, ceci par le biais des fluides circulant dans la torche à plasma d'arc.

En effet, une tête de torche à plasma d'arc est traversée par différents trajets de fluides caractérisés par une certaine conductivité électrique et circulant au contact d'au moins une partie des composants de la tête de torche. Ainsi, une tête de torche à plasma d'arc est en général traversée par un ou plusieurs trajets de fluide de refroidissement, généralement de l'eau, afin d'évacuer la chaleur accumulée par les composants de la torche au cours du procédé de coupage.

Ainsi, le document US 3,558,973 divulgue une tête de torche à plasma d'arc traversée par plusieurs trajets d'eau circulant au contact de différents composants de la torche, notamment au contact de la coiffe externe, de la tuyère amont et du composant porte-tuyère.

Il s'ensuit que ces différents composants de la torche peuvent être mis en liaison électrique par le biais du fluide de refroidissement circulant dans la torche, ledit fluide étant conducteur électrique.

On peut tenter de remédier à ce phénomène en utilisant, en tant que fluide de refroidissement, de l'eau déminéralisée présentant une conductivité électrique faible, typiquement inférieure à 20 µS/cm. Toutefois, cette solution n'est pas idéale du fait que la conductivité électrique ne peut jamais être nulle et que la valeur de la conductivité électrique de l'eau augmente de façon inévitable au fil du temps. L'eau déminéralisée est également plus coûteuse que l'eau du réseau traditionnel.

En outre, dans le cas d'un procédé de coupage par plasma d'arc en vortex d'eau, la tête de torche comprend une tuyère aval, c'est-à-dire agencée en aval de la tuyère amont, apte à distribuer un jet d'eau tourbillonnant en vortex autour de la colonne de plasma d'arc établie entre l'électrode et la tôle. Dans ce cas, un circuit d'eau additionnel traverse la torche à plasma d'arc et alimente la tuyère aval.

Ce type de torche est notamment connu du document US 5,124,525, qui enseigne une tête de torche à plasma d'arc comprenant une tuyère aval alimentée en eau, l'eau empruntant plusieurs trajets traversant la tête de torche. Ainsi, l'eau de vortex circule en contact avec la coiffe externe de la torche et des composants de la tête de torche, en particulier le composant porte-tuyère supportant la tuyère amont, ce composant porte-tuyère étant en contact avec la tuyère amont et donc soumis au même potentiel électrique que celle-ci.

Du fait que l'eau de vortex alimente la torche en circuit ouvert, les consommations d'eau de vortex sont importantes. Par conséquent, pour limiter les coûts de production, on utilise en général de l'eau du réseau, c'est-à-dire de l'eau non déminéralisée et présentant une conductivité électrique de l'ordre de 450 µS/cm. Il s'ensuit que des potentiels électriques conséquents peuvent apparaitre entre les différents éléments constitutifs de la tête de torche, en particulier entre la coiffe externe et des composants de la tête de torche.

La torche selon US 5,124,525 comprend en outre un bloc isolant en plastique qui assure une isolation électrique entre l'électrode et les tuyères amont et aval. Toutefois, cette solution n'empêche pas l'apparition de potentiels électriques au niveau de la coiffe externe puisque l'eau de vortex circule entre la coiffe externe et le bloc isolant, au contact des tuyères amont et aval.

Outre l'apparition de potentiels électriques résultant de la circulation de fluide conducteur électrique au sein de la torche, un transfert d'électrons peut également avoir lieu entre l'arc électrique lui-même et la tuyère aval lors du fonctionnement de la torche à plasma d'arc. Si la coiffe externe et la tuyère aval sont mises en contact électrique, il s'ensuit que la coiffe externe devient elle aussi soumise à un potentiel électrique.

L'apparition de potentiels électriques au niveau de la coiffe externe a pu être vérifiée à l'aide de mesures réalisées sur une torche à plasma d'arc selon l'art antérieur, en particulier une torche à plasma d'arc destinée à un procédé de coupage en vortex d'eau. Dans le cadre de ces mesures, la tôle ou la pièce découpée était immergée, c'est-à-dire que l'opération de coupage était réalisée sous l'eau de vortex, ceci permettant de minimiser le bruit et les fumées générés par le procédé. En phase de coupage, une tension de l'ordre de 120 à 140V a été mesurée entre la coiffe externe et la tôle. En phase d'amorçage de l'arc, une tension de l'ordre de 180 V a été mesurée entre le composant porte-électrode et la coiffe externe. Des différences de potentiel inférieures à ces valeurs, mais tout aussi significatives, ont également été mesurées entre le même type de composants équipant des têtes de torche à plasma d'arc classiques, c'est-à-dire sans distribution de vortex d'eau.

Or, l'apparition de potentiels électriques entre la coiffe externe et certains composants de la tête de torche, conduit à plusieurs problèmes.

Tout d'abord, l'apparition de ces potentiels électriques affecte la durée de vie des composants de la tête de torche à plasma d'arc.

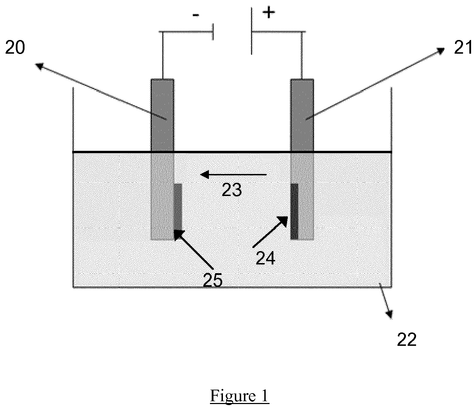

En effet, l'immersion de composants métalliques soumis à une différence de potentiel dans un fluide conducteur 22, comme c'est le cas pour les composants d'une tête de torche à plasma d'arc, conduit au phénomène d'électrolyse, illustré en Figure 1, et entraîne la dissolution 24, ou dit autrement l'attaque ou la corrosion électrolytique, du composant 21 formant anode et le dépôt 25 d'anions métalliques sur le composant 20 formant cathode. Le déplacements des anions est symbolisé par la flèche 23. Dans le cas d'une tête de torche à plasma d'arc, ce phénomène résulte donc en une dissolution, et donc en une usure, de certains composants reliés au pôle positif du générateur de courant et se trouvant en contact avec les fluides circulant au travers de la tête de torche. En effet, les tensions mesurées ci-dessus sont largement supérieures à celles déclenchant une réaction d'électrolyse, typiquement quelques centaines de mV à quelques V dans un milieu aqueux.

L'intensité de ce phénomène d'usure, c'est-à-dire la quantité de matière de l'anode dissoute par unité de temps, dépend notamment du type de métaux constituant les composants (selon une échelle d'activation galvanique en l'absence d'application de différence de potentiel externe imposée), de la conductivité du fluide, de la distance entre les composants jouant le rôle de cathode et anode, de la différence de potentiel appliquée et du temps d'application et du rapport des surfaces des composants. En particulier, plus le fluide dans lequel baigne les composants est conducteur, plus l'intensité de courant pouvant circuler dans le circuit électrolytique est grande, et plus l'usure de l'anode est importante. De même, plus la distance entre les composants diminue, plus l'usure de l'anode est importante. Par conséquent, le phénomène de corrosion électrolytique est plus rapide entre le composant porte-tuyère et la coiffe externe, reliées par l'eau du réseau et positionnés habituellement à une faible distance de quelques mm l'un de l'autre, qu'entre le composant porte-électrode et la coiffe externe, reliés par de l'eau déminéralisée et positionnés habituellement à une distance de quelques dizaines de mm.

Typiquement, ce type d'attaque électrochimique occasionne le détachement du la couche de nickel qui revêt la surface intérieure de la coiffe externe, ainsi qu'un dépôt sur le composant porte-tuyère. Il s'ensuit une détérioration de la coiffe externe et du composant porte-tuyère, et par conséquent une réduction de la durée de vie de la torche à plasma d'arc. Des essais d'endurance consistant en la réalisation de plusieurs découpes de 30 minutes en continu avec une torche à plasma d'arc en vortex d'eau ont effectivement révélé que la surface du composant porte-tuyère située en regard de la coiffe externe était attaquée.

Par ailleurs, l'apparition de potentiels électriques au niveau de la coiffe externe de la torche à plasma d'arc conduit à d'autres problèmes critiques qui perturbent son utilisation dans une installation automatique de coupage.

En effet, une tension élevée entre la coiffe externe et la tuyère amont conduit inévitablement à l'apparition de courants de fuite. Ceux-ci provoquent des baisses de tensions, ce qui entraîne des difficultés d'amorçage du fait d'une diminution de l'énergie disponible pour amorcer l'arc électrique, ainsi que des perturbations de la détection de la tôle par la torche. Il s'ensuit que le procédé de coupage mettant en oeuvre la torche est moins performant et moins fiable.

En outre, l'apparition de potentiels électriques au niveau de la coiffe externe conduit à des tensions élevées entre la coiffe et la tôle à découper, elle-même soumise à un potentiel électrique. En cas de liaison électrique entre la coiffe et la tôle, occasionnée par exemple par un déplacement de la torche hors de la zone de travail jusqu'à toucher un élément de la structure de l'installation de coupage, un passage de courant conséquent peut donc avoir lieu à travers les composants de la torche, conduire ainsi à l'endommagement de la torche et à des difficultés d'amorçage de l'arc électrique.

Le problème à résoudre est dès lors de proposer une torche à plasma d'arc utilisable en coupage par plasma d'arc, en particulier une torche à plasma d'arc utilisable en coupage par plasma d'arc en vortex d'eau, qui soit améliorée pour résoudre ou limiter les problèmes d'usure des composants équipant la tête de torche à plasma d'arc exposés précédemment, et qui permette en outre de fiabiliser le procédé de coupage mettant en oeuvre une telle torche en limitant, voire en évitant, les perturbations de fonctionnement résultant de l'apparition de potentiels électriques au niveau de la coiffe externe de ladite torche.

La solution de l'invention est alors une torche à plasma d'arc selon la revendication 1.

Par ailleurs, selon le mode de réalisation considéré, l'invention peut comprendre l'une ou plusieurs des caractéristiques selon les revendications dépendantes.

Selon un autre aspect, l'invention porte également sur un procédé de coupage par plasma d'arc d'une pièce métallique mettant en oeuvre une torche à plasma d'arc selon l'invention

De préférence, ledit procédé met en oeuvre un vortex de deuxième fluide distribué par une tuyère aval autour de la colonne de plasma d'arc.

Dans le cadre de l'invention, le courant d'arc est comprise entre 20 et 1000 A, de préférence supérieur à 200 A, de préférence encore supérieur à 400 A.

L'invention va maintenant être mieux comprise grâce à la description détaillée suivante faite en références aux Figures annexées parmi lesquelles :
- la Figure 2 est une vue en coupe d'une tête de torche à plasma d'arc selon l'art antérieur, c'est-à-dire sans mise en oeuvre de la solution de l'invention, en particulier une tête de torche destinée au coupage par plasma d'arc en vortex d'eau, et
- la Figure 3 est une vue en coupe d'une tête de torche à plasma d'arc destinée au coupage par plasma d'arc en vortex d'eau selon l'invention.

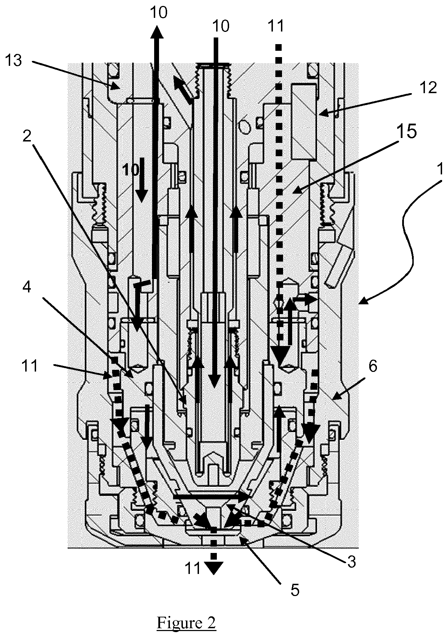

Comme on le voit sur la Figure 2, une tête de torche à plasma d'arc 1 destinée au coupage par plasma d'arc en vortex d'eau comprend un certain nombre de composants essentiels, notamment une électrode 2, une tuyère amont 3 et une tuyère aval 5. Un élément porte-tuyère 4 supporte la tuyère amont 3 et un élément porte-électrode 13 supporte l'électrode 2. Une coiffe externe 6 est agencée autour de la tête de torche 1. Cette coiffe, généralement en laiton, permet de protéger la tête de torche 1 des chocs et des projections de métal fondu pouvant survenir au cours de la phase de coupage de la tôle. Un bloc isolant 15 est agencé entre le porte-électrode 13 et le porte-tuyère 4 de manière à les isoler électriquement.

La tête de torche 1 est connectée à un corps de torche 12 servant d'interface entre la tête de torche 1 et le générateur de courant, le générateur haute fréquence servant à l'amorçage de l'arc ainsi que les alimentations en fluide de l'installation de coupage par plasma d'arc (non schématisés).

Ces alimentations en fluide alimentent un premier groupe d'un ou plusieurs circuits, i. e. conduits ou trajets, de fluide traversant la tête de torche 1.

En effet, les composants de la tête de torche 1 sont soumis à des températures très élevées, aussi bien pendant la phase d'amorçage de l'arc que pendant la phase de coupage. Il est donc nécessaire de les refroidir. En général, les moyens de refroidissement des composants de la tête de torche 1 comprenant au moins un premier trajet d'un premier fluide 10 circulant à travers la tête de torche 1, au contact d'un ou plusieurs composants de la tête de torche 1. Le premier fluide est injecté dans la tête de torche 1 puis pompé par un groupe de refroidissement et sert à évacuer la chaleur accumulée par les composants de la tête de torche 1 au cours de son fonctionnement. Le premier fluide de refroidissement utilisé est en général de l'eau, de préférence de l'eau déminéralisée. L'utilisation d'eau déminéralisée est rendue possible économiquement par le fait que le fluide de refroidissement circule en circuit fermé.

A titre d'exemple, les flèches 10 de la Figure 2 illustrent certains des trajets qui peuvent être suivis par le premier fluide 10 à travers la tête de torche 1, notamment à l'intérieur de l'électrode 2, le long de la surface externe de la tuyère amont 3 et à l'intérieur de l'élément porte-tuyère 4.

En outre, une tête de torche à plasma d'arc équipée d'une tuyère aval 5 comprend un deuxième groupe de trajets d'un deuxième fluide 11, dit autrement au moins un deuxième trajet d'un deuxième fluide 11, circulant à travers la tête de torche 1 et alimentant ladite tuyère aval 5. Le deuxième fluide 11 peut être un gaz aval distribué coaxialement au gaz amont plasmagène, ou encore en vortex autour du jet de gaz amont, jouant un rôle protecteur vis-à-vis du plasma d'arc.

En particulier, dans le cas d'une torche destinée au coupage par plasma d'arc en vortex, le deuxième fluide 11 suit un deuxième trajet (représenté par les flèches 11 sur la Figure 2) jusqu'à la tuyère aval 5 pour être distribué par la tuyère aval 5 sous forme d'un jet de fluide 11 se propageant en vortex de manière à former un tourbillon autour de la colonne de plasma d'arc établie entre l'électrode et la tôle découpée. La torche à plasma d'arc en vortex comprend alors des moyens de création de vortex permettant de générer un tourbillon de fluide 11. Ces moyens sont bien connus et peuvent par exemple comprendre un ou plusieurs canaux de distribution de fluide inclinés, ou tout autre dispositif apte et conçu pour distribuer un ou plusieurs jets d'eau en rotation autour de la colonne de plasma d'arc.

Dans le cas d'une torche à plasma d'arc en vortex d'eau, le deuxième fluide 11 est de l'eau injectée en rotation pour obtenir un tourbillon creux d'eau formant un manchon d'eau autour de la colonne de plasma d'arc. Le vortex d'eau permet de gainer la colonne de plasma d'arc, d'emprisonner les fumées de coupage, de refroidir la tôle et procure en outre une isolation phonique. Pour des raisons de limitation de coûts de production, l'eau de vortex circulant en circuit ouvert, l'eau de vortex provient du réseau standard et n'est donc pas déminéralisée.

Au vu des premier et deuxième trajets suivis par les premier et deuxième fluides 10 et 11 et schématisés sur la Figure 2, on comprend dès lors le problème qui se pose, à savoir que certaines surfaces des composants de la tête de torche 1, entre lesquels s'établissent des potentiels électriques conséquents, se trouvent en contact avec le même trajet d'eau, notamment d'eau non déminéralisée, c'est-à-dire dont la conductivité électrique n'est pas négligeable. Ces composants sont donc reliés électriquement.

C'est le cas en particulier pour la coiffe externe 6 et la tuyère amont 3, qui sont mises en contact électrique par l'intermédiaire de l'eau de vortex circulant entre elles, ce qui contribue également à l'apparition d'un potentiel électrique au niveau de la coiffe externe 6 et conduit aux perturbations du fonctionnement de la torche précédemment exposés.

De plus, la coiffe externe 6 et le composant porte-tuyère 4, ce dernier étant directement en contact avec la tuyère amont 3, sont aussi reliés par de l'eau du réseau à conductivité électrique. Ces deux composants sont agencés à une faible distance l'un de l'autre, typiquement quelques mm. Le phénomène d'électrolyse mentionné précédemment donne donc lieu à une dégradation de la surface située en regard des composants de la tête de torche 1, c'est-à-dire sa surface interne.

Pour résoudre ce problème et améliorer l'isolation électrique de la coiffe externe 6 de la tête de torche 1, on agence, conformément à l'invention, une première jupe isolante 7, ci-après dénommée jupe isolante (7) contre tout ou partie de la surface de la coiffe externe 6 située en regard des composants de la tête de torche 1.

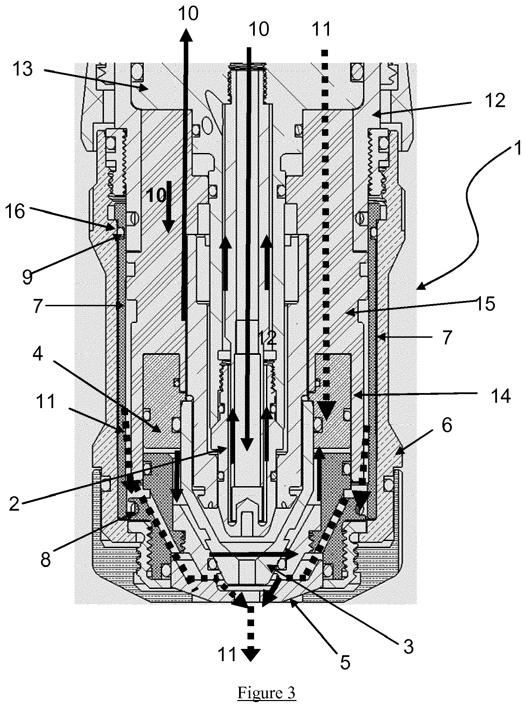

La Figure 3 illustre la solution de l'invention et présente une vue en coupe d'une tête de torche à plasma d'arc destinée au coupage par plasma d'arc en vortex d'eau comprenant une jupe isolante 7.

Dans cette configuration de torche, on voit que la jupe isolante 7 définit au moins une partie du deuxième trajet de deuxième fluide 11.

La jupe isolante 7 peut recouvrir tout ou partie de la surface de la coiffe externe 6, c'est-à-dire recouvrir tout ou partie de la hauteur de cette surface et tout ou partie de la périphérie de cette surface. Préférentiellement, la jupe isolante 7 recouvre au moins les parties de surface interne de la coiffe 6 se trouvant en contact avec un ou plusieurs fluides circulant à travers la tête de torche 1. Etant entendu que lesdites parties de surface interne sont celles se trouvant en contact avec un ou plusieurs fluides circulant dans la tête de torche lorsqu'aucune jupe isolante 7 n'est agencée dans ladite tête, comme on le voit sur la Figure 2.

Par « surface interne » de la coiffe externe 6, on entend dans le cadre de la présente invention, toute surface de la coiffe externe 6 qui se trouve en regard ou en vis-à-vis d'au moins une partie d'un composant de la torche.

Par « agencée contre » tout ou partie de la surface située en regard des composants de la tête de torche 1, on entend que la jupe isolante 7 est positionnée le long de la surface interne de la coiffe externe 6 et qu'elle se trouve en contact avec cette surface ou qu'il existe un jeu très faible entre cette surface et la jupe isolante 7, typiquement moins de quelques dixièmes de mm. Toutefois, pour garantir une meilleure isolation électrique de la coiffe externe 6, il est préférable qu'il y ait contact entre la jupe isolante 7 et la surface interne de la coiffe externe 6.

Quel que soit le mode de réalisation de l'invention, la jupe isolante 7 est faite d'un matériau isolant électrique, encore appelé matériau diélectrique, c'est-à-dire qui présente la propriété d'interdire ou de minimiser grandement le passage de tout courant électrique entre deux parties conductrices. A l'inverse, un matériau conducteur électriquement contient de nombreux porteurs de charge électrique, c'est-à-dire des électrons, pouvant se déplacer facilement sous l'action d'un champ électromagnétique et de là autoriser le passage de courant électrique entre deux éléments conducteurs électrique.

La jupe isolante 7 est avantageusement formée d'un matériau plastique. Ce type de pièce présente l'avantage d'être solide et peu onéreuse. De préférence, la jupe isolante 7 est formée d'un matériau thermoplastique, c'est-à-dire un matériau plastique offrant une bonne résistance aux hautes températures, typiquement plus de 100°C et avantageusement plus de 200°C, par exemple un thermoplastique de la marque Techtron® ou équivalent.

L'épaisseur de la jupe isolante 7 est typiquement comprise entre 0.5 et 5 mm, de préférence entre 1 et 3 mm.

Dans un premier mode de réalisation de l'invention, la jupe isolante 7 est une pièce de forme cylindrique ouverte en ses deux extrémités et positionnée à l'intérieur de la coiffe externe 6, coaxialement à celle-ci. Par exemple, cette pièce peut être emmanchée de force dans la coiffe externe 6.

De manière optionnelle, au moins un composant d'étanchéité 8 peut être agencé entre la jupe isolante 7 et au moins un composant de la tête de torche 1. Pour rendre la solution de l'invention encore plus efficace, au moins un composant d'étanchéité 16 peut également être agencé dans une gorge périphérique 9 aménagée dans la paroi périphérique externe de la jupe isolante 7. Le composant d'étanchéité 16, par exemple un joint torique ou équivalent, joue alors le joint de fluide et empêche tout mouillage de la coiffe externe 6 avec l'un des fluides 10 ou 11 circulant à travers la tête de torche 1.

Dans un second mode de réalisation de l'invention, la jupe isolante 7 résulte d'au moins une opération de traitement de surface réalisée sur tout ou partie de la surface de la coiffe externe 6 située en regard des composants de la tête de torche 1. L'épaisseur de la jupe isolante 7 est alors comprise entre quelques microns et quelques centièmes de mm. Ainsi, la jupe isolante 7 peut être formée d'au moins une couche d'anodisation, de préférence d'anodisation dure. Dans ce cas, on élabore par électrolyse une ou plusieurs couches d'oxydes à partir de la surface métallique de la coiffe externe 6. Les couches d'oxydes formées ont un pouvoir d'isolant électrique, et présente également l'avantage, contrairement aux matériaux plastique, d'être thermiquement conductrices, ce qui permet de conserver une bonne efficacité de refroidissement de la coiffe externe 6. Outre l'anodisation, des méthodes de dépôt telles que *Chemical Vapor Deposition, Physical Vapor Deposition, Plasma-enhanced Chemical Vapor Deposition,* la projection thermique ou l'émaillage peuvent être utilisées. Des matériaux tels que les oxydes de zirconium, les oxydes d'aluminium ou encore les nitrures de bore peuvent être déposés.

Dans un mode de réalisation alternatif de l'invention, la jupe isolante 7 peut être formée d'au moins une couche résultant d'au moins une opération de traitement de surface sur tout ou partie de la surface interne de la coiffe externe 6, ladite au moins une couche étant elle-même recouverte en tout ou partie d'une pièce en plastique.

Par ailleurs, selon un autre aspect de l'invention, une seconde jupe isolante 14 faite d'un matériau isolant électrique, de préférence un matériau choisi parmi ceux cités plus haut pour la première jupe isolante 7, est également agencée contre tout ou partie de la surface externe du composant porte-tuyère 4, c'est-à-dire sa surface située en regard de la coiffe externe 6. De préférence, cette seconde jupe isolante 14 recouvre l'intégralité de la surface externe du composant porte-tuyère 4.

Selon un mode de réalisation particulier, comme illustré en Figure 3, la seconde jupe isolante 14 résulte d'un changement de géométrie du bloc isolant 15 et est en fait un prolongement du bloc isolant 15 de la torche à plasma d'arc venant entourer le porte-tuyère 4.

Selon un mode particulier de réalisation de l'invention, la tête de torche 1 dans laquelle la jupe isolante 7 est celle d'une torche à plasma d'arc en vortex d'eau. Cette torche comprend ainsi des moyens de génération d'un vortex, c'est-à-dire un tourbillon, d'eau formant un manchon d'eau autour du jet de plasma de manière à constricter, c'est-à-dire gainer, la colonne de plasma d'arc sortant de la torche.

Selon la présente invention, la première jupe isolante 7 est agencée contre tout ou partie de la surface de la coiffe externe 6 située en regard du ou desdits composants de la tête de torche de manière à éviter également un contact entre la surface de la coiffe externe 6 située en regard des composants de la tête de torche et le deuxième trajet de deuxième fluide 11 circulant à travers la tête de torche 1 à vortex d'eau. De la sorte, on évite la mise en liaison électrique de la coiffe 6, par le biais du deuxième fluide, avec un ou plusieurs composants de la torche

Néanmoins, la solution de l'invention peut tout aussi bien être mise en oeuvre dans une tête de torche classique, c'est-à-dire fonctionnant sans vortex d'eau, pour laquelle des potentiels électrique conséquents peuvent tout aussi bien apparaître entre la coiffe externe 6 et les composants de la tête de torche 1, en particulier le composant porte-tuyère 5 et la tuyère amont 3, dès lors que la coiffe externe 6 est en contact avec de l'eau de refroidissement ou de vortex.

En fait, quelque soit le type de tête de torche à plasma d'arc utilisé, le rôle de la jupe isolante 7 est d'assurer une meilleure isolation électrique de la coiffe externe 6 en évitant ou en minimisant tout contact entre la surface de la coiffe externe située en regard des composants de la tête de torche 1 et les premier ou deuxième fluides 10 ou 11 circulant dans la tête. De la sorte, on évite, ou du moins on minimise grandement le phénomène d'apparition de potentiels électriques au niveau de la coiffe externe 6 de la tête de torche.

### Exemples

Afin de démontrer l'amélioration apportée à une tête de torche à plasma d'arc mettant en oeuvre la solution de l'invention, c'est-à-dire l'amélioration de l'isolation électrique de la coiffe externe de la tête de torche, des mesures de tensions ont été réalisées au niveau de la coiffe externe d'une torche à plasma d'arc destiné au coupage en vortex d'eau selon l'art antérieur, c'est-à-dire non équipée d'une première jupe isolante agencée contre tout ou partie de la surface interne de la coiffe externe, et au niveau de la coiffe externe de la même torche à plasma d'arc mais cette fois équipée d'une première jupe isolante selon l'invention, agencée contre tout ou partie de la surface interne de la coiffe externe.

La première jupe isolante utilisée est une pièce de forme cylindrique ouverte en ses deux extrémités, emmanchée de force dans la coiffe externe de la torche et recouvrant la totalité de la surface interne de la coiffe. La paroi de la jupe isolante, d'une épaisseur de 2.5 mm, est formée d'un plastique thermo-résistant de la marque Techtron®.

Plusieurs séries de mesures de tension ont été effectuées en phase de coupage d'une tôle métallique avec le plasma d'arc produit par la torche. Ces mesures de tensions ont principalement été réalisées entre la coiffe externe et la tôle. Dans le cadre de ces essais, la tension d'arc au cours de la phase d'amorçage était de l'ordre de 45 à 50 V et l'intensité de l'ordre de 23 à 25 A. Au cours de la phase de coupage de la tôle, la tension était de l'ordre de 180 V, pour une vitesse de coupe d'environ 65 cm/min, et de l'ordre de 200 V, pour une vitesse de coupe d'environ 20 cm/min, l'intensité étant de l'ordre de 300 A. La torche à plasma d'arc utilisée est une torche à plasma d'arc en vortex d'eau. Elle est équipée d'une tuyère amont distribuant de l'azote et d'une tuyère aval distribuant de l'eau. L'eau de vortex était de l'eau du réseau, c'est-à-dire de l'eau non déminéralisée. Les mesures ont été réalisées en phase de coupage de la tôle, ou dit autrement de la pièce métallique, la tôle n'étant pas immergée dans l'eau de vortex. De plus, les mesures comparatives de tensions ont été réalisées sans résistance de contact entre la coiffe et la tôle et avec une résistance de contact d'une valeur de 1000 Ohm, de façon à simuler un contact électrique entre la tôle et la coiffe, pouvant se produire par exemple par l'intermédiaire d'un pièce ou d'un élément d'installation industrielle de coupage.

Le tableau 1 présente les valeurs des tensions maximales mesurées au niveau de la coiffe externe de le tête de torche selon l'art antérieur, c'est-à-dire sans jupe isolante agencée contre la surface interne de la coiffe externe. Le tableau 2 présente les résultats des mesures effectuée au niveau de la coiffe externe de le tête de torche selon invention, c'est-à-dire munie d'une jupe isolante agencée contre la surface interne de la coiffe externe et possédant les caractéristiques précisées plus haut.

**Tableau 1**

| Couple | Tension mesurée | Phase | Tôle | Qualité de l'eau de vortex | Résistance de contact |
|---|---|---|---|---|---|
| COIFFE - TOLE | 140 V | Coupage | Non immergée | Réseau | Sans |
| COIFFE - TOLE | 126 V | Coupage | Non immergée | Réseau | 1000 Ohm |

**Tableau 2**

| Couple | Tension mesurée | Phase | Tôle | Qualité de l'eau de vortex | Résistance de contact |
|---|---|---|---|---|---|
| COIFFE - TOLE | 95 V | Coupage | Non immergée | Réseau | Sans |
| COIFFE - TOLE | 4V | Coupage | Non immergée | Réseau | 1000 Ohm |

On constate que les tensions mesurées au niveau de la coiffe externe de le tête de torche selon l'art antérieur sont nettement plus élevées que celles mesurée au niveau de la coiffe externe de le tête de torche selon l'invention.

Par ailleurs, aucune usure visible du composant porte-tuyère de la tête de torche à plasma d'arc selon l'invention n'a été observée suite aux essais de coupe.

Ces essais démontrent donc clairement l'efficacité de l'invention qui permet de proposer une torche à plasma d'arc pour laquelle le phénomène d'usure de certains composants résultant de l'apparition de potentiels électrique au niveau de la coiffe externe de la tête de torche, en particulier entre la coiffe externe et le composant porte-tuyère, est grandement réduit, voire éliminé, et ce en améliorant l'isolation électrique de la coiffe externe. En outre, la meilleure isolation électrique de la coiffe externe obtenue dans le cadre de l'invention permet de fiabiliser le procédé opéré avec une telle torche en limitant l'apparition de courants de fuite, et dans le cas d'une résistance de contact entre la tôle et la coiffe, en limitant le passage de courant à travers les composants de la torche, et delà le risque d'endommagement de la torche.

L'application principale de la torche à plasma d'arc de l'invention est un procédé de coupage de tôle métallique par plasma d'arc. Le procédé de coupage selon l'invention met en oeuvre un plasma d'arc généré avec un courant d'arc compris entre 20 et 1000 A, de préférence supérieur à 200A, de préférence encore supérieur à 400 A.

La solution de l'invention peut être utilisée dans tout type de torche à plasma d'arc, les torches à plasma d'arc comprenant toutes en général une coiffe externe refroidie par contact avec un fluide plus ou moins conducteur circulant au contact d'autres composants de la torche.

Néanmoins, la solution de l'invention est particulièrement avantageuse pour une torche à plasma d'arc en vortex d'eau et dans le cadre d'un procédé de coupage de tôle métallique par plasma d'arc avec utilisation d'un vortex d'eau, les phénomènes d'usure et de perturbations du procédé susmentionnés étant accélérés lorsqu'un fluide conducteur tel que de l'eau de vortex non déminéralisée circule à travers une tête de torche à plasma d'arc.

## Revendications

1. Torche à plasma d'arc comprenant :
- une tête de torche (1) alimentée en courant et comprenant une électrode (2) et au moins un composant choisi dans le groupe formé par une tuyère amont (3), un élément porte-tuyère (4), une tuyère aval (5),
- des moyens de refroidissement des composants de la tête de torche (1) comprenant au moins un premier trajet, allant d'une entrée à une sortie de la tête de torche, d'un premier fluide (10) circulant à travers la tête de torche (1),
- une coiffe externe (6) agencée autour de la tête de torche (1), et
- une première jupe isolante (7) faite d'un matériau isolant électrique agencée contre tout ou partie de la surface de la coiffe externe (6) située en regard du ou desdits composants de la tête de torche (1),
**caractérisée en ce que** la première jupe isolante (7) est agencée de manière à éviter un contact entre la surface de la coiffe externe (6) située en regard des composants de la tête de torche (1) et ledit au moins un premier trajet dudit premier fluide (10) circulant à travers la tête de torche (1).

2. Torche à plasma d'arc selon la revendication 1, **caractérisée en ce que** la première jupe isolante (7) est une pièce de forme cylindrique ouverte en ses deux extrémités et emmanchée de force dans la coiffe externe (6).

3. Torche selon l'une des revendications précédentes, **caractérisée en ce que** la première jupe isolante (7) est faite d'un matériau plastique.

4. Torche selon l'une des revendications précédentes, **caractérisée en ce que** la première jupe isolante (7) résulte d'au moins une opération de traitement de surface réalisée sur tout ou partie de la surface de la coiffe externe (6) située en regard des composants de la tête de torche (1).

5. Torche selon l'une des revendications précédentes, **caractérisée en ce que** la première jupe isolante (7) est formée d'au moins une couche d'anodisation.

6. Torche à plasma d'arc selon l'une des revendications précédentes, **caractérisée en ce qu'**au moins un premier composant d'étanchéité (8) est agencé entre la première jupe isolante (7) et au moins un composant de la tête de torche (1).

7. Torche selon l'une des revendications précédentes, **caractérisée en ce qu'**au moins un second composant d'étanchéité (16) est agencé dans une gorge périphérique (9) aménagée dans la paroi périphérique externe de la première jupe isolante (7).

8. Torche à plasma d'arc selon l'une des revendications précédentes, comportant l'élément porte-tuyère (4), **caractérisée en ce qu'**elle comprend en outre une deuxième jupe isolante (14) faite d'un matériau isolant électrique, agencée contre tout ou partie de la surface de l'élément porte-tuyère (4) située en regard de la coiffe externe (6).

9. Torche à plasma d'arc selon l'une des revendications précédentes, **caractérisée en ce qu'**elle comprend en outre la tuyère aval (5) et un deuxième trajet d'un deuxième fluide (11) circulant à travers la tête de torche (1), et alimentant la tuyère aval (5) de manière à ce que ladite tuyère (5) distribue un jet de deuxième fluide (11), ladite première jupe isolante (7) étant agencée contre tout ou partie de la surface de la coiffe externe (6) située en regard du ou desdits composants de la tête de torche (1) de manière à éviter un contact entre la surface de la coiffe externe (6) située en regard des composants de la tête de torche (1) et ledit au moins un deuxième trajet de deuxième fluide (11) circulant à travers la tête de torche (1).

10. Torche à plasma d'arc selon la revendication 9, **caractérisée en ce qu'**elle comprend en outre des moyens de création de vortex permettant de générer un tourbillon d'eau formant un manchon d'eau autour de la colonne de plasma d'arc lorsque le deuxième fluide (11) est de l'eau.

11. Torche à plasma d'arc selon l'une des revendications 9 ou 10, **caractérisée en ce que** la première jupe isolante (7) définit au moins une partie du deuxième trajet de deuxième fluide (11).

12. Procédé de coupage par plasma d'arc d'une pièce métallique mettant en oeuvre une torche à plasma d'arc selon l'une des revendications précédentes.

13. Procédé selon la revendication 12, **caractérisé en ce qu'**un vortex de deuxième fluide (11), en particulier un vortex d'eau, est distribué par une tuyère aval (5) autour de la colonne de plasma d'arc.

## Patentansprüche

1. Lichtbogenplasmabrenner, Folgendes umfassend:
- einen Brennerkopf (1), der mit Strom versorgt wird, und eine Elektrode (2) und zumindest eine Komponente umfasst, die aus der Gruppe ausgewählt wird, die durch eine Vordüse (3), ein Düsenträgerelement (4), eine Nachdüse (5) gebildet wird,
- Mittel zum Kühlen der Komponenten des Brennerkopfes (1), zumindest einen ersten Verlauf umfassend, der von einem Eingang zu einem Ausgang des Brennerkopfes führt, für ein erstes Fluid (10), das durch den Brennerkopf (1) strömt,
- eine externe Abdeckung (6), die um den Brennerkopf (1) herum angeordnet ist, und
- eine erste isolierende Schürze (7), die aus einem elektrischen Isolationsmaterial gefertigt ist, an der gesamten Fläche der externen Abdeckung (6) oder an einem Teil davon anliegt, die sich gegenüber der oder den Komponenten des Brennerkopfes (1) befindet,
**dadurch gekennzeichnet, dass** die erste isolierende Schürze (7) angeordnet ist, um einen Kontakt zwischen der Fläche der externen Abdeckung (6), die sich gegenüber den Komponenten des Brennerkopfes (1) befindet, und dem zumindest einen ersten Verlauf für das ersten Fluid (10) zu verhindern, das durch den Brennerkopf (1) strömt.

2. Lichtbogenplasmabrenner nach Anspruch 1, **dadurch gekennzeichnet, dass** die erste isolierende Schürze (7) ein zylinderförmiges Teil ist, welches an seinen beiden Enden offen ist und mit Kraft in die externe Abdeckung (6) eingepresst wird.

3. Brenner nach einem der vorhergehenden Ansprüche, **dadurch gekennzeichnet, dass** die erste isolierende Schürze (7) aus einem Kunststoffmaterial gefertigt ist.

4. Brenner nach einem der vorhergehenden Ansprüche, **dadurch gekennzeichnet, dass** die erste isolierende Schürze (7) aus zumindest einer Oberflächenbehandlungsvorgang hervorgeht, die auf der gesamten Fläche der externen Abdeckung (6) oder auf einem Teil davon durchgeführt wird, die sich gegenüber den Komponenten des Brennerkopfes (1) befindet.

5. Brenner nach einem der vorhergehenden Ansprüche, **dadurch gekennzeichnet, dass** die erste isolierende Schürze (7) aus zumindest einer Anodisierungsschicht gebildet wird.

6. Lichtbogenplasmabrenner nach einem der vorhergehenden Ansprüche, **dadurch gekennzeichnet, dass** zumindest eine erste Dichtkomponente (8) zwischen der ersten isolierenden Schürze (7) und zumindest einer Komponente des Brennerkopfes (1) angeordnet ist.

7. Brenner nach einem der vorhergehenden Ansprüche, **dadurch gekennzeichnet, dass** zumindest eine zweite Dichtkomponente (16) in einer peripheren Nut (9) angeordnet ist, die in der peripheren externen Wand der ersten isolierenden Schürze (7) eingearbeitet ist.

8. Lichtbogenplasmabrenner nach einem der vorhergehenden Ansprüche, das Düsenträgerelement (4) umfassend, **dadurch gekennzeichnet, dass** er darüber hinaus eine zweite isolierende Schürze (14) umfasst, die aus einem elektrischen Isolationsmaterial gefertigt ist, an der gesamten Fläche des Düsenträgerelements (4) oder an einem Teil davon anliegt, die sich gegenüber der externen Abdeckung (6) befindet.

9. Lichtbogenplasmabrenner nach einem der vorhergehenden Ansprüche, **dadurch gekennzeichnet, dass** er darüber hinaus die Nachdüse (5) und einen zweiten Verlauf für ein zweites Fluid (11) umfasst, das durch den Brennerkopf (1) strömt, und die Nachdüse (5) versorgend, sodass die Düse (5) einen Strahl eines zweiten Fluides (11) verteilt, wobei die erste isolierende Schürze (7) an der gesamten Fläche der externen Abdeckung (6) oder an einem Teil davon anliegt, die sich gegenüber der oder den Komponenten des Brennerkopfes (1) befindet, um einen Kontakt zwischen der Fläche der externen Abdeckung (6), die sich gegenüber den Komponenten des Brennerkopfes (1) befindet, und dem zumindest einen zweiten Verlauf für das zweite Fluid (11) zu verhindern, das durch den Brennerkopf (1) strömt.

10. Lichtbogenplasmabrenner nach Anspruch 9, **dadurch gekennzeichnet, dass** er darüber hinaus Mittel zur Bildung einer Verwirbelung umfasst, anhand derer ein Wasserwirbel erzeugt werden kann, der einen Wasserstutzen um die Bogenplasmasäule bildet, wenn das zweite Fluid (11) Wasser ist.

11. Lichtbogenplasmabrenner nach einem der Ansprüche 9 oder 10, **dadurch gekennzeichnet, dass** die erste isolierende Schürze (7) zumindest einen Teil des zweiten Verlaufs für das zweite Fluid (11) definiert.

12. Verfahren zum Schneiden eines Metallteils durch Bogenplasma, das einen Lichtbogenplasmabrenner nach einem der vorhergehenden Ansprüche einsetzt.

13. Verfahren nach Anspruch 12, **dadurch gekennzeichnet, dass** eine Verwirbelung eines zweiten Fluides (11), insbesondere ein Wasserwirbel, durch eine Nachdüse (5) um die Bogenplasmasäule herum verteilt wird.

## Claims

1. Plasma arc torch comprising:
- a torch head (1) that is supplied with current and comprises an electrode (2) and at least one component selected from the group containing an upstream nozzle (3), a nozzle carrier (4), and a downstream nozzle (5),
- means for cooling the components of the torch head (1) comprising at least one first path, travelling from an inlet to an outlet of the torch head, of a first fluid (10) flowing through the torch head (1),
- an outer cover (6) arranged around the torch head (1), and
- a first insulating jacket (7) that is made from an electrically insulating material and is arranged against all or part of the surface of the outer cover (6) facing said one or more components of the torch head (1),
**characterised in that** the first insulating jacket (7) is arranged to prevent contact between the surface of the outer cover (6) facing the components of the torch head (1) and said at least one first path of said first fluid (10) flowing through the torch head (1).

2. Plasma arc torch according to claim 1, **characterised in that** the first insulating jacket (7) is a cylindrical part that has an opening in its two ends and is forcibly fixed in the outer cover (6).

3. Torch according to one of the previous claims, **characterised in that** the first insulating jacket (7) is made from a plastic material.

4. Torch according to one of the previous claims, **characterised in that** the first insulating jacket (7) is the result of at least one surface treatment operation performed on all or part of the surface of the outer cover (6) facing the components of the torch head (1).

5. Torch according to one of the previous claims, **characterised in that** the first insulating jacket (7) and is formed from at least one anodisation layer.

6. Plasma arc torch according to one of the previous claims, **characterised in that** at least one first sealing component (8) is arranged between the first insulating jacket (7) and at least one component of the torch head (1).

7. Torch according to one of the previous claims, **characterised in that** at least one second sealing component (16) is arranged in a peripheral groove (9) formed in the outer peripheral wall of the first insulating jacket (7).

8. Plasma arc torch according to one of the previous claims, comprising the nozzle carrier (4), **characterised in that** it further comprises a second insulating jacket (14) that is made from an electrically insulating material and is arranged against all or part of the surface of the nozzle carrier (4) facing the outer cover (6).

9. Plasma arc torch according to one of the previous claims, **characterised in that** it further comprises the downstream nozzle (5) and a second path of a second fluid (11) flowing through the torch head (1), and supplying the downstream nozzle (5) such that said nozzle (5) distributes a jet of the second fluid (11), said first insulating jacket (7) being arranged against all or part of the surface of the outer cover (6) facing said one or more components of the torch head (1) to prevent contact between the surface of the outer cover (6) facing the components of the torch head (1) and said at least one second path of the second fluid (11) flowing through the torch head (1).

10. Plasma arc torch according to claim 9, **characterised in that** it further comprises means for creating a vortex for generating a water swirl forming a water sleeve around the plasma arc column when the second fluid (11) is water.

11. Plasma arc torch according to one of claims 9 or 10, **characterised in that** the first insulating jacket (7) defines at least one portion of the second path of the second fluid (11).

12. Method for cutting a metal part using a plasma arc implementing a plasma arc torch according to one of the previous claims.

13. Method according to claim 12, **characterised in that** a vortex of a second fluid (11), in particular a water vortex, is distributed by a downstream nozzle (5) around the plasma arc column.
